# EUROPÄISCHE PATENTSCHRIFT

(11) **EP 2 461 444 B1**
(45) Veröffentlichungstag und Bekanntmachung des Hinweises auf die Patenterteilung: **05.06.2013**
(21) Anmeldenummer: 11008972.9
(22) Anmeldetag: 11.11.2011
(51) Int. Cl.: H02G 3/12

(54) **Schwenkbare Geräteeinbaudose für einen Kabelkanal**
Pivotable device mounting plate for a cable duct
Boîtier d'appareil encastrable pivotant pour un caniveau pour câbles

(30) Priorität: 02.12.2010 DE 202010016144 U
(43) Veröffentlichungstag der Anmeldung: 06.06.2012
(73) Patentinhaber: Tehalit GmbH, 67716 Heltersberg (DE)
(72) Erfinder: Mattfeld, Christian, 66919 Schauerberg (DE); Schnurr, Richard, 66957 Vinningen (DE)
(74) Vertreter: Nuss, Laurent

(56) Entgegenhaltungen:
- DE-U1- 20 000 777
- DE-U1- 20 022 098
- DE-U1- 29 911 657

## Beschreibung

Die vorliegende Erfindung betrifft eine Geräteeinbaudose für einen Kabelkanal, welche über ein an den Stützschenkeln ausgebildetes Gelenk schwenkbar ist.

Geräteeinbaudosen werden bei Kabelkanalsystemen zur Installation von elektrischen Geräten wie Steckdosen, Schaltern oder dergleichen verwendet. Solche Geräteeinbaudosen sind beispielsweise in der DE 20022098 U 1, der DE 20000777 U1, der DE 93046468 U1, der DE 9306127 U1, der DE 9303404 U1 und der DE 9214202 U1 beschrieben.

In der DE 20022098 U1 wird eine Geräteeinbaudose für den Einsatz in Kabelkanalsystemen beschrieben, bei denen die Geräteeinbaudose wenigstens eine Verschlusskontur des Kabelkanalsystems aufweist, bei der über entsprechende Verriegelungselemente die Geräteeinbaudose unabhängig von der Höhe des Kanals universal einsetzbar ist. Der Einbau erfordert mehrere Montageschritte. Eine Demontage ist daher etwas aufwändig, was nicht zufiedenstellend ist.

Eine weitere Geräteeinbaudose der zuvor genannten Art ist in der DE 4436147 C2 beschrieben, bei der die Geräteeinbaudose über seitliche Stützschenkel mit den Deckelhalteprofilen eines Kanalunterteils kooperiert. Wie auch bei den zuvor genannten Geräteeinbaudosen sind diese Stützschenkel starr. Dadurch muss die Geräteeinbaudose bei der Installation von oben in das Kanalunterteil gedrückt werden. Problematisch ist, dass bei der Montage zunächst die Kabel und Leitungen eingeführt werden müssen und erst dann die Geräteeinbaudose auf das Kanalunterteil montiert wird. Bei einer nachträglichen Montage muss die gesamte Geräteeinbaudose wieder von dem Kanalunterteil entfernt werden. Gerade bei frontrastenden Geräteeinbaudosen, wie sie bei Wandinstallationskanälen vorkommen, ist dieser Umstand unbefriedigend.

In der DE 299 11 657 U1 wird ein Leitungsführungskanal beschrieben, bei dem der die Geräte tragende Deckel aufklappbar ist, so dass elektrische Leitungen problemlos nachgerüstet werden können. Der Deckel besitzt hierfür eine Frontplatte, die an ihrer Oberkante mit Hilfe eines Gelenks mit dem Kanalunterteil schwenkbar und an ihrer Unterkante am Kanalunterteil festlegbar ist. Der Deckel und das Kanalunterteil sind dazu mit korrespondierenden Rastvorrichtungen ausgerüstet. Durch den geöffneten Deckel können über einen Spalt bei Bedarf Leitungen in das Kanalunterteil eingelegt werden.

Vor diesem Hintergrund ist es daher Aufgabe der vorliegenden Erfindung, eine Geräteeinbaudose für einen Kabelkanal anzugeben, bei der eine schnelle und einfache Montage mit nur wenigen Montageschritten möglich ist.

Diese Aufgabe wird gelöst durch eine schwenkbare Geräteeinbaudose mit den Merkmalen des Anspruchs 1. Bevorzugte Ausführungsformen finden sich in den Unteransprüchen wieder.

Die erfindungsgemäße Geräteeinbaudose besteht aus einem Gehäuse mit den üblichen Anschlusseinrichtungen für Kabel und Leitungen zur Versorgung der elektrischen Geräte. Seitlich am Gehäuse sind Stützschenkel angebracht, welche mit den Deckelhalteprofilen des Kanalunterteils kooperieren. Erfindungsgemäß ist vorgesehen, dass das Gehäuse über ein an den Stützschenkeln ausgebildetes Gelenk schwenkbar ist. Vorzugsweise wird dies mittels eines Bolzenscharniers erreicht. In weiteren Ausführungsformen kann es sich bei dem Gelenk um ein Kugelgelenk oder ein Filmscharnier handeln.

Die erfindungsgemäße Geräteeinbaudose kann bei der Montage zunächst im nicht fixierten Zustand entlang des Kabelkanals in Längsrichtung in die gewünschte Position verschoben werden. Gleichzeitig können von der offenen Seite Kabel oder Leitungen in den Kanal eingelegt werden. Ist die endgültige Montageposition erreicht, so wird sie über an der Unterseite des Oberteils des Gehäuses federnde Rasthaken mit dem Kanalunterteil verrastet.

Bei der frontrastenden Variante greifen zum Verschluss die federnden Rasthaken unter die Deckelhalteprofile des Kanalunterteils, so dass beim Andrücken der Geräteeinbaudose auf das Kanalunterteil ein Formschluss entsteht, während in Längsrichtung des Kanals ein Reibschluss wirkt. Die Verrastung erfolgt durch das Aufdrücken einer Blende, die üblicherweise zur Kaschierung von elektrischen Geräten verwendet wird. Damit wird mit einem einzigen Montageschritt die gesamte Geräteeinbaudose am Kanal fixiert.

Die Blende besitzt vorzugsweise nach unten weisende Klemmfüße, welche beim Andrücken der Blende auf das Gehäuse in entsprechende Aussparungen des Oberteils des Gehäuses der Geräteeinbaudose greifen. Zur Erzeugung des Formschlusses greifen die federnden Rasthaken beim Zusammenschluss unter die Deckelhalteprofile des Kanalunterteils. Dadurch ist die Geräteeinbaudose an dem Kanal fixiert. Bevorzugt sind an den Klemmfüßen seitliche Nasen ausgebildet, welche beim Aufdrücken der Blende auf das Gehäuse der Geräteeinbaudose die federnden Rasthaken unter die Deckelhalteprofile des Kanalunterteils schieben. Bei einer frontrastenden Geräteeinbaudose ist diese mit dem Kanalunterteil verbunden.

In einer weiteren Variante wird die Geräteeinbaudose, wie an sich bekannt, über einen Montagesteg, der sich an der Unterseite des Gehäuses befindet, mit einer C-Schiene des Kanalunterteils verbunden. Alternativ sind auch andere (bekannte) Befestigungsmöglichkeiten der Geräteeinbaudose an einen Kabelkanal denkbar.

Die erfindungsgemäße Geräteeinbaudose ermöglicht eine einfache Montage und Demontage von Elektroinstallationseinrichtungen. Solange die Geräteeinbaudose noch nicht auf das Kanalunterteil aufgerastet ist, lässt sie sich entlang des Kabelkanals in die gewünschte Montageposition verschieben. In der Schwenkposition ist ein Zugriff auf die Anschlusskontakte der Geräteeinbaudose und/oder das Einlegen von Kabeln und Leitungen möglich. Ist die Montageposition erreicht, kann der Monteur mit einem weiteren Handgriff die Blende auf die Geräteeinbaudose aufdrücken, wodurch die nach unten weisenden Rasthaken des Gehäuses der Geräteeinbaudose unter die Deckelhalteprofile des Kanalunterteils geschoben werden. Erreicht wird dies durch die nach unten weisenden Klemmfüße der Blende. Ferner ist vorteilhafterweise zu erwähnen, dass die Blende vorzugsweise mit dem Kanalrand bündig abschließt.

Die erfindungsgemäße Geräteeinbaudose eignet sich bevorzugt für einen frontrastenden Einbau wie Brüstungskanäle oder Wandkanäle oder für den Einbau bei Kanälen, die mit einer C-Schiene ausgerüstet sind.

Die Erfindung wird in den nachfolgenden Zeichnungen näher erläutert. Es zeigen
- Fig. 1: eine Darstellung von der Frontseite eines Kanalunterteils mit einer schwenkbaren Geräteeinbaudose,
- Fig. 2: eine isometrische Darstellung eines Kabelkanals mit der erfindungsgemäßen Geräteinbaudose.

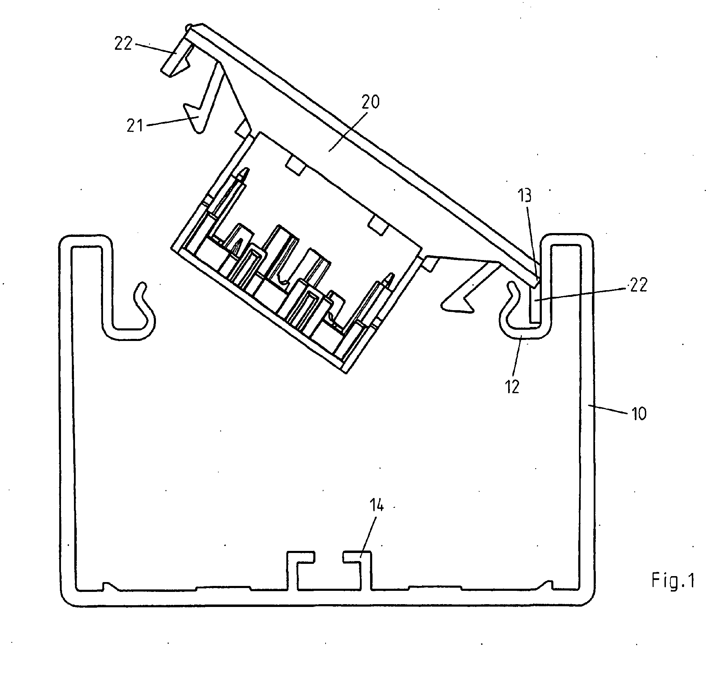

In Fig. 1 erkennt man in Frontdarstellung die erfindungsgemäße Geräteeinbaudose, welche einseitig auf ein Kanalunterteil 10 eines Kabelkanalsystems eingelegt ist. Das Gehäuse 20 der Geräteeinbaudose kann über einen seitlichen Stützschenkel 22, welcher von oben in die Lasche des Deckelhalteprofils 12 greift, über ein Gelenk 13 nach außen geklappt werden. Dadurch können, leicht zugänglich, die Kabel und Leitungen in den Kanal eingelegt werden. Ferner ist es möglich, die Geräteeinbaudose in diesem Zustand in die gewünschte Montageposition entlang des Kabelkanals zu verschieben. Sind die Kabel und Leitungen in das Kanalunterteil 10 eingelegt, so kann das Gehäuse 20 der Geräteeinbaudose mit dem Kanalunterteil 10 verrastet werden, indem die federnden Rasthaken 21 unter die Deckelhalteprofile 12 des Kanalunterteils 10 greifen.

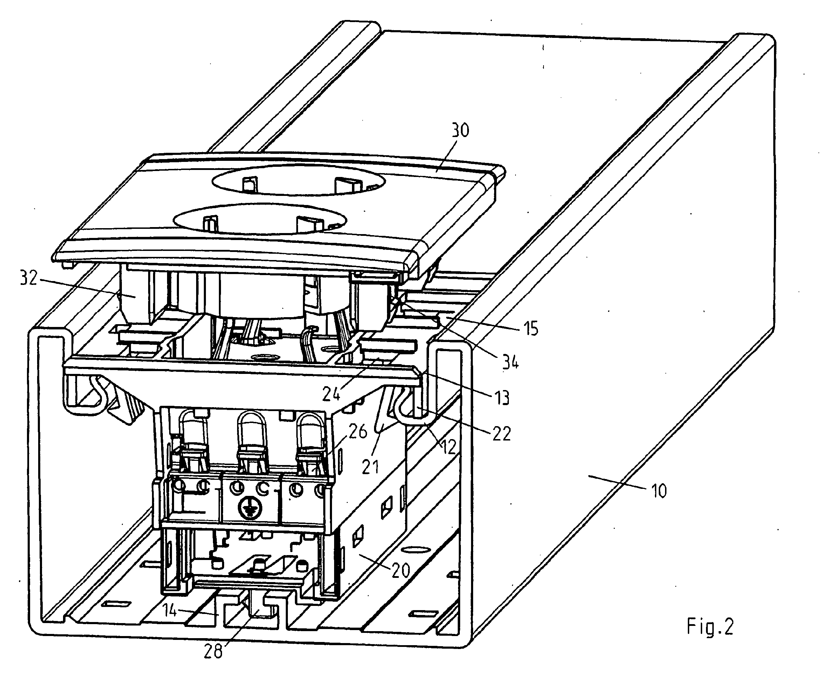

In Fig. 2 ist die Montageposition bei einem Kanal mit C-Schiene dargestellt. Die Rasthaken 21 sind an die Deckelhalteprofile 12 des Kanalunterteils 10 angelegt. Zur Verrastung wird von oben eine Blende 30 auf das Gehäuse 20 aufgesteckt. Die Blende 30 umfasst nach unten weisende Klemmfüße 32, welche seitliche Nasen 34 besitzen. In der gezeigten Ausführungsform handelt es sich bei dem Gelenk 13 um ein Filmscharnier.

Bei der Montage wird zunächst einseitig ein Stützschenkel 22 in die Lasche des Deckelhalteprofils 12 des Kanalunterteils 10 eingelegt. Das Gehäuse 20 der Geräteeinbaudose kann auf diese Weise einseitig nach oben bzw. nach außen geklappt werden. Kabel und Leitungen können in das Kanalunterteil 10 eingelegt werden; Anschlussleitungen können mit den Anschlusselementen 26 der Geräteeinbaudose verbunden werden. Danach wird das Gehäuse 20 nach unten auf das Kanalunterteil 10 geklappt, so dass die Stützschenkel 22 beidseitig in die Laschen der Deckelhalteprofile 12 greifen. Wenn erwünscht, kann die Geräteeinbaudose, da sie noch verschiebbar ist, entlang des Kanalunterteils 10 in die gewünschte Montageposition gebracht werden.

Zur Fixierung wird die Blende 30 von oben mit einem einzigen Handgriff auf das Oberteil 15 des Gehäuses 20 verrastet. Dabei greifen die Klemmfüße 32 in entsprechende Ausnehmungen 24 des Oberteils 15. Über die seitlichen Nasen 34 der Klemmfüße 32 werden die federnden Rasthaken 21 der Geräteeinbaudose unter die Deckelhalteprofile 12 geschoben und bewirken einen Formschluss, was insbesondere bei einem frontrastenden Einbau erwünscht ist. Durch den Verschluss wird die Geräteeinbaudose fest mit dem Kanalunterteil 10 fixiert.

Zusätzlich oder alternativ kann die Geräteeinbaudose mit dem Kanalunterteil 10 über einen Montagesteg 28 mit einer am Kanalboden ausgebildeten C-Schiene 14 befestigt werden.

Ein besonderer Vorteil der erfindungsgemäßen Geräteeinbaudose ist darin zu sehen, dass durch die anlenkbaren Stützschenkel 22 die Geräteeinbaudose einseitig nach oben geschwenkt werden kann, wodurch das Einlegen von Kabel und Leitungen erleichtert wird. Ferner kann die Geräteeinbaudose vor der endgültigen Verrastung in die gewünschte Montageposition in Längsrichtung des Kanalunterteils 10 verschoben werden. Schließlich kann die Fixierung mit einem einzigen Handgriff durch den Monteur erfolgen, indem die Blende 30 auf das Gehäuse 20 aufgerastet wird. Zusätzliches Werkzeug ist nicht erforderlich, die Montage erfolgt schnell und mit wenigen Handgriffen.

## Patentansprüche

1. Geräteinbaudose für einen Kabelkanal, bestehend aus
- einem Gehäuse (20) mit Anschlusseinrichtungen (26) für Kabel und Leitungen,
- seitlich am Gehäuse (20) angebrachten Stützschenkeln (22), welche mit den Deckelhalteprofilen (12) eines Kanalunterteils (10) kooperieren,
**dadurch gekennzeichnet, dass** das Gehäuse (20) über ein an den Stützschenkeln (22) ausgebildetes Gelenk (13) schwenkbar ist.

2. Geräteeinbaudose nach Anspruch 1, **dadurch gekennzeichnet, dass** es sich bei dem Gelenk (13) um ein Bolzengelenk handelt.

3. Geräteeinbaudose nach Anspruch 1, **dadurch gekennzeichnet, dass** es sich bei dem Gelenk (13) um ein Filmscharnier handelt.

4. Geräteeinbaudose nach Anspruch 1, **dadurch gekennzeichnet, dass** es sich bei dem Gelenk (13) um ein Kugelgelenk handelt.

5. Geräteeinbaudose nach einem der Ansprüche 1 bis 4, **dadurch gekennzeichnet, dass** an der Unterseite des Oberteils (15) des Gehäuses (20) federnde Rasthaken (21) ausgebildet sind, welche unter die Deckelhalteprofile (12) des Kanalunterteils (10) greifen.

6. Geräteeinbaudose nach einem der Ansprüche 1 bis 5, **dadurch gekennzeichnet, dass** auf dem Oberteil (15) des Gehäuses (20) eine Blende (30) mit nach unten weisenden Klemmfüßen (32) angeordnet ist, wobei die Klemmfüße (32) beim Andrücken der Blende (30) auf das Gehäuse (20) in entsprechende Aussparungen (24) des Oberteils (15) greifen, wodurch die federnden Rasthaken (21) beim Zusammenschluss unter die Deckelhalteprofile (12) des Kanalunterteils (10) greifen.

7. Geräteeinbaudose nach einem der Ansprüche 1 bis 6, **dadurch gekennzeichnet, dass** an den Klemmfüßen (32) seitlich Nasen (34) ausgebildet sind.

8. Geräteeinbaudose nach einem der Ansprüche 1 bis 7, **dadurch gekennzeichnet, dass** die Unterseite des Gehäuses (20) über einen Montagesteg (28) mit einer C-Schiene des Kanalunterteils (10) verbunden ist.

9. Geräteeinbaudose nach einem der Ansprüche 1 bis 8, **dadurch gekennzeichnet, dass** es sich um eine frontrastende Geräteeinbaudose handelt.

## Claims

1. Appliance flush-mounting box for a cable duct, comprising
- a housing (20) with connection devices (26) for cables and lines,
- supporting limbs (22) which are fitted on the side of the housing (20) and cooperate with the cover retaining profiles (12) of a duct lower part (10),
**characterized in that** the housing (20) can be pivoted by means of a joint (13) which is formed on the support limbs (22).

2. Appliance flush-mounting box according to Claim 1, **characterized in that** the joint (13) is a pin joint.

3. Appliance flush-mounting box according to Claim 1, **characterized in that** the joint (13) is a film hinge.

4. Appliance flush-mounting box according to Claim 1, **characterized in that** the joint (13) is a ball joint.

5. Appliance flush-mounting box according to one of Claims 1 to 4, **characterized in that** sprung latching hooks (21) are formed on the lower face of the upper part (15) of the housing (20), the said latching hooks engaging beneath the cover retaining profiles (12) of the duct lower part (10).

6. Appliance flush-mounting box according to one of Claims 1 to 5, **characterized in that** a panel (30) with downwardly pointing clamping feet (32) is arranged on the upper part (15) of the housing (20), wherein the clamping feet (32) engage in corresponding cutouts (24) in the upper part (15) when the panel (30) is pressed onto the housing (20), as a result of which the sprung latching hooks (21) engage beneath the cover retaining profiles (12) of the duct lower part (10) during the assembly process.

7. Appliance flush-mounting box according to one of Claims 1 to 6, **characterized in that** lugs (34) are formed on the sides of the clamping feet (32).

8. Appliance flush-mounting box according to one of Claims 1 to 7, **characterized in that** the lower face of the housing (20) is connected to a C rail of the duct lower part (10) by means of a mounting web (28).

9. Appliance flush-mounting box according to one of Claims 1 to 8, **characterized in that** it is a front-latching appliance flush-mounting box.

## Revendications

1. Boîtier d'appareil encastrable pour un caniveau de câbles, constitué de
- un boîtier (20) avec des dispositifs de connexion (26) pour des câbles et des lignes,
- des branches de soutien (22) installées latéralement sur le boîtier (20), qui coopèrent avec des profilés de maintien de couvercle (12) d'une partie inférieure de caniveau (10),
**caractérisé en ce que** le boîtier (20) est pivotant au moyen d'une articulation (13) formée sur les branches de soutien (22).

2. Boîtier d'appareil encastrable selon la revendication 1, **caractérisé en ce que** l'articulation (13) est une articulation à pivot.

3. Boîtier d'appareil encastrable selon la revendication 1, **caractérisé en ce que** l'articulation (13) est une charnière pelliculaire.

4. Boîtier d'appareil encastrable selon la revendication 1, **caractérisé en ce que** l'articulation (13) est une articulation sphérique.

5. Boîtier d'appareil encastrable selon l'une des revendications 1 à 4, **caractérisé en ce que** des crochets de crantage élastique (21) sont formés sur le dessous de la partie supérieure (15) du boîtier (20) et s'engagent sous les profilés de maintien de couvercle (12) de la partie inférieure de caniveau (10).

6. Boîtier d'appareil encastrable selon l'une des revendications 1 à 5, **caractérisé en ce qu'**un cache (30) avec des pieds de serrage (32) dirigés vers le bas est disposé sur la partie supérieure (15) du boîtier (20), sachant que, lorsque le cache (30) est pressé sur le boîtier (20), les pieds de serrage (32) s'engagent dans des évidements correspondants (24) de la partie supérieure (15), de sorte que les crochets de crantage élastique (21) s'engagent lors de l'assemblage sous les profilés de maintien de couvercle (12) de la partie inférieure de caniveau (10).

7. Boîtier d'appareil encastrable selon l'une des revendications 1 à 6, **caractérisé en ce que** des ergots (34) sont formés latéralement sur les pieds de serrage (32).

8. Boîtier d'appareil encastrable selon l'une des revendications 1 à 7, **caractérisé en ce que** le dessous du boîtier (20) est relié par l'intermédiaire d'une nervure de montage (28) à un rail en C de la partie inférieure de caniveau (10).

9. Boîtier d'appareil encastrable selon l'une des revendications 1 à 8, **caractérisé en ce qu'**il s'agit d'un boîtier d'appareil encastrable à enclenchement frontal.
